# EUROPEAN PATENT APPLICATION

(11) **EP 4 438 382 A1**
(43) Date of publication of application: **02.10.2024**
(21) Application number: 23165840.2
(22) Date of filing: 31.03.2023
(51) Int. Cl.: B60L 7/10, B60L 8/00, B60L 50/75, B60L 58/34, H01M 16/00

(54) **FUEL CELL AS AN ELECTROLYZER IN FUEL CELL ELECTRIC VEHICLES FOR ONBOARD HYDROGEN PRODUCTION**

(71) Applicant: VOLVO TRUCK CORPORATION, 405 08 Göteborg (SE)
(72) Inventor: SOUNDARARAJAN, Gokul, 642205 Bangalore (IN); RANGANATHAN, Aswin, 642205 Bangalore (IN)
(74) Representative: Valea AB

(57) **Abstract**

A method for onboard hydrogen production for use in fuel cells in a fuel cell electric vehicle (FCEV) is disclosed. The method comprises transferring vehicular-generated electrical energy produced by a regenerative braking system during braking and/or decent of the FCEV to one or more hydrogen electrolyzers. Water obtained from operation of one or more hydrogen fuel cells during generation of electricity from hydrogen is provided to the one or more hydrogen electrolyzers. Hydrogen is generated by means of the one or more hydrogen electrolyzers from water and the vehicular-generated electrical energy and collected in a hydrogen storage device. Heat emitted during operation of the FCEV is directed to the one or more hydrogen electrolyzers to accelerate production of hydrogen gas by the one or more hydrogen electrolyzers. A system, and a vehicle comprising a system for onboard hydrogen production for use in fuel cells in a FCEV is also disclosed.

## Description

### TECHNICAL FIELD

The disclosure relates generally to fuel cell vehicles. In particular aspects, the disclosure relates to fuel cells as an electrolyzer in a fuel cell electrical vehicle for onboard hydrogen production. The disclosure can be applied in heavy-duty vehicles, such as trucks, buses, and construction equipment. Although the disclosure may be described with respect to a particular vehicle, the disclosure is not restricted to any particular vehicle.

### BACKGROUND

Fuel cell electric vehicles (FCEVs) use electricity to power an electric motor. In contrast to other electric vehicles, FCEVs produce electricity using a fuel cell powered by hydrogen, rather than drawing electricity from only a battery for running the motor to propel the vehicle. Although automakers could design an FCEV with plug-in capabilities to charge the battery, most FCEVs today use the battery e.g., for recapturing braking energy, providing extra power during short acceleration events, and to smooth out the power delivered from the fuel cell with the option to idle or turn off the fuel cell during low power needs. The amount of energy stored onboard is determined by the size of the hydrogen fuel tank. Hydrogen from the vehicle's fuel tanks combines with oxygen inside the fuel cell stack to generate electricity via reverse electrolysis. The electrons are removed from the hydrogen gas, sent through the circuit to power the motor, and combine with oxygen on the other side of the circuit to form water vapor, which is vented via the car's exhaust.

There are currently four main sources for the commercial production of hydrogen: natural gas, oil, coal, and electrolysis, which account for about 48%, 30%, 18% and 4% of the world's hydrogen production respectively. Methods to produce hydrogen without the use of fossil fuels involve the process of water splitting or splitting the water molecule (H₂O) into the components oxygen and hydrogen. When the source of energy for water splitting is renewable or low in carbon, the hydrogen produced is sometimes referred to as green hydrogen. Since one of the major objectives of FCEVs is to drastically reduce the carbon footprint, it is also necessary to consider the impact the process of producing hydrogen has on the emission of greenhouse gases.

### SUMMARY

According to a first aspect of the disclosure, a method of onboard hydrogen production for use in fuel cells in a FCEV is provided. The method comprises
- transferring vehicular-generated electrical energy produced by a regenerative braking system during braking and/or decent of the FCEV to one or more hydrogen electrolyzers; and
- providing water obtained from operation of one or more hydrogen fuel cells during generation of electricity from hydrogen to the one or more hydrogen electrolyzers; and
- generating hydrogen by means of the one or more hydrogen electrolyzers from water and the vehicular-generated electrical energy; and
- directing heat emitted during operation of the FCEV to the one or more hydrogen electrolyzers for accelerating production of hydrogen gas by the one or more hydrogen electrolyzers; and
- collecting generated hydrogen in a hydrogen storage device.

According to a second aspect of the disclosure, a system for onboard hydrogen production for use in hydrogen fuel cells in a FCEV is provided. The system comprises
- a regenerative braking system configured to convert mechanical energy to electrical energy;
- one or more hydrogen electrolyzers configured to generate hydrogen from water and electrical energy;
- one or more hydrogen fuel cells configured to generate electrical energy and water from hydrogen;
- one or more energy storage systems for storing electrical energy generated by the regenerative braking system and/or the one or more hydrogen fuel cells;
- one or more hydrogen storage devices for storing hydrogen generated by the hydrogen electrolyzer;
- a controller for directing surplus heat generated by heat emitting components in the FCEV to the one or more hydrogen electrolyzers.

The first and second aspects of the disclosure may seek to take advantage of the kinetic energy released during deceleration of a moving FCEV, and by means of onboard hydrogen electrolyzers convert the kinetic energy into chemical energy in the form of hydrogen gas that can be used in hydrogen fuel cells to produce electricity to propel the FCEV. A technical benefit, besides the generation of hydrogen gas for use in hydrogen fuel cells, may include that a portion of the surplus heat generated during the operation of the FCEV is directed to the hydrogen electrolyzers to improve efficiency of the electrolysis reaction in the hydrogen electrolyzers.

In some examples the system further includes a solar energy harvesting device provided on an exterior of the FCEV. A technical benefit may include the possibility of obtaining free electrical energy from solar energy harvesting devices when the FCEV is parked or driving outdoors and exposed to sunlight. The solar generated energy may be used to power the hydrogen electrolyzer to store up hydrogen during daytime when the sun is shining and then use the hydrogen to fuel the hydrogen fuel cells at night. Any surplus of electrical energy provided from the solar energy harvesting device not used for in electrolysis may be transferred to the energy storage system.

In some examples, electrical energy and water will be generated by means of the one or more hydrogen fuel cells from hydrogen obtained from the hydrogen storage device.

In some examples, the one or more hydrogen electrolyzers is a proton exchange membrane (PEM) electrolyzer. A technical benefit of using a PEM electrolyzer may include its ability to operate effectively at high current densities and variable power levels within seconds. It also has low gas permeability, high energy efficiency and a fast rate of hydrogen production.

In some examples, the one or more hydrogen fuel cells are one or more polymer electrolyte membrane (PEM) fuel cells assembled into a (PEM) fuel cell stack. A technical benefit may include that fuel stacks are very energy efficient to achieve higher voltages when PEM fuel cells are joined in series to form layered stacks. Depending on the application, a fuel cell stack can contain hundreds of individual fuel cells and may be engineered to fit any power needs.

In some examples, the system further includes a water storage device for storing water generated by the one or more hydrogen fuel cells during generation of electricity from hydrogen. A technical benefit may include that water generated during the electrochemical reaction of hydrogen and oxygen to generate electrical energy taking place in the hydrogen fuel cell is very pure and requires no further purification before being used in the hydrogen electrolyzer to produce hydrogen.

In some examples, the system may further include a compressor configured to convert low-pressure oxygen to high-pressure hydrogen. Hydrogen gas generated by the hydrogen electrolyzer may be transferred to a compressor which converts low-pressure hydrogen gas to high-pressure hydrogen. The high-pressure hydrogen gas may be stored in the hydrogen storage device until used in the one or more hydrogen fuel cells during generation of electricity. A technical benefit may include that the compressor converts the large volumes of low-pressure hydrogen generated by the hydrogen electrolyzers to a much smaller volume of high-pressure hydrogen gas that may be stored in one or more onboard hydrogen storage devices.

In some examples, heat generated by heat emitting components are selected from the group consisting of the energy storage system, hydrogen fuel cells, radiators, heaters, brake resistors, power converters and the electric motor. A technical benefit of using dissipating heat from heat emitting components in the FCEV may include that instead of spending energy on cooling the heat emitting components, the surplus heat is instead used for improving the rate of the electrolysis reaction taking place in the hydrogen electrolyzers.

In some examples, the system may further include an oxygen storage device for storing oxygen generated by the one or more hydrogen electrolyzers. A technical benefit may include that instead of taking air from outside of the FCEV to provide the hydrogen fuel cells with oxygen, oxygen generated during electrolysis in the hydrogen electrolyzers may be stored until needed by the hydrogen fuel cells for generation of electrical energy from hydrogen.

In some examples, the one or more hydrogen fuel cells may obtain oxygen from the oxygen storage device. A technical benefit may include that oxygen produced during electrolysis is very pure and needs no further purification before being used in the hydrogen fuel cells.

In some examples, the one or more PEM fuel cells operate as a hydrogen electrolyzer generating hydrogen and oxygen from water. A technical benefit may include a much-improved capacity of both hydrogen and electric energy generation onboard the FCEV. Since separate hydrogen electrolyzer units performing only hydrogen electrolysis can be omitted from the system and replaced by PEM fuel cells that are capable of performing both electrolysis and electrical energy generation, the system becomes much more efficient. Depending on demand, the PEM fuel cells may be assigned to produce hydrogen to fuel the PEM fuel cells or electrical energy to propel the FCEV.

According to a third aspect of the disclosure a FCEV comprising the system for onboard hydrogen production is provided. The third aspect of the disclosure may seek to take advantage of the kinetic energy released during deceleration of the moving FCEV and by means of onboard hydrogen electrolyzers convert the kinetic energy into chemical energy in the form of hydrogen gas that can be used in hydrogen fuel cells to produce electricity to propel the FCEV. Surplus heat generated during the operation of the FCEV is directed to the hydrogen electrolyzers to improve efficiency of the electrolysis reaction in the hydrogen electrolyzers. A technical benefit, besides the generation of hydrogen gas for use in hydrogen fuel cells, may include that less energy requiring resources in the FCEV are required for cooling heat generating components.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
Fig. 1 is an exemplary system of onboard hydrogen production for use in hydrogen fuel cells in a FCEV.
Fig. 2 is an exemplary view of a hydrogen electrolyzer.
Fig. 3 is an exemplary view of a hydrogen fuel cell.
Fig. 4 is a further example of a system of onboard hydrogen production for use in hydrogen fuel cells in a FCEV.
Fig. 5 is a further example of a system of onboard hydrogen production for use in hydrogen fuel cells in a FCEV.
Fig. 6 is an exemplary view of the flow of hydrogen, oxygen and water between the one or more hydrogen electrolyzers and the one or more fuel cells in the system.
Fig. 7 is a further exemplary view of the flow of hydrogen, oxygen and water between the one or more hydrogen electrolyzers and the one or more fuel cells in the system.
Fig. 8 is a further exemplary view of the flow of hydrogen, oxygen and water between the one or more hydrogen electrolyzers and the one or more fuel cells in the system.

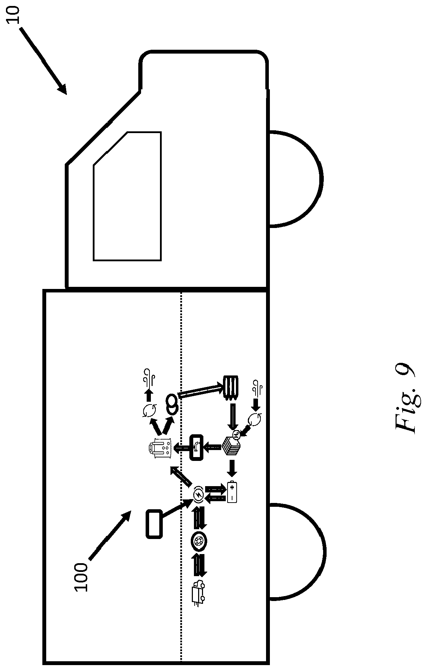

Fig. 9 is an exemplary view of a FCEV comprising a system of onboard hydrogen production for use in hydrogen fuel cells in a FCEV.

### DETAILED DESCRIPTION

Aspects set forth below represent the necessary information to enable those skilled in the art to practice the disclosure.

Regenerative braking is an energy recovery mechanism that slows down a moving vehicle by converting its kinetic energy into a form of energy that can be either used immediately or stored until needed. In this mechanism, the electric traction motor uses the vehicle's momentum to recover energy that would otherwise be lost to the brake discs as heat. In a hydrogen fuel cell powered vehicle the transmission of the vehicle is set up such that when the driver applies the brakes, the electric motor reverses itself and applies a resistance to the wheels rather than power. Electric motors, when used in reverse, function as generators and will then convert mechanical energy into electrical energy that can be used to recharge the batteries. In addition to improving the overall efficiency of the vehicle, regeneration can significantly extend the life of the braking system as the mechanical parts will not wear out as quickly.

However, during the braking or deceleration of the vehicle large amounts of energy is produced in a short instance that cannot be stored in full due to limitation in storage capacity. Thus, a large part of the kinetic energy may still be lost as heat either in the brakes or regenerative resistors. The present document discloses a system and a method of how the kinetic energy generated during deceleration of a vehicle can be utilized in an effective manner in onboard hydrogen production for subsequent use in hydrogen fuel cells to propel the hydrogen-powered FCEV.

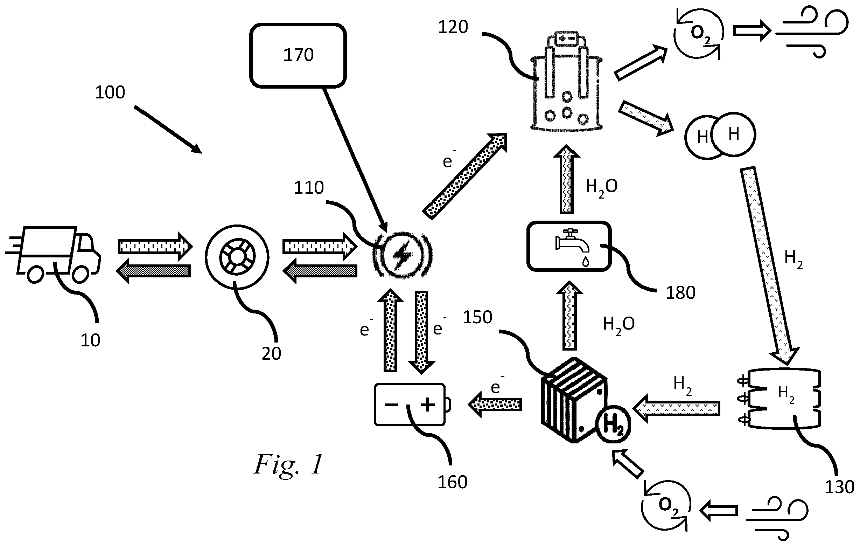

With reference to Fig. 1 a system 100 for onboard hydrogen production for use in fuel cells in a FCEV 10 is schematically illustrated. The system 100 includes a regenerative braking system 110, one or more hydrogen electrolyzers 120, one or more hydrogen storage devices 130, a plurality of hydrogen fuel cells 140 assembled in one or more fuel stacks 150, one or more energy storage systems 160 and a controller 170.

The system 100 includes a regenerative braking system 110 which, when a driver releases the accelerator or presses the brake, reverses the torque of the vehicle's electric motor. This turns the motor into a generator that will convert the mechanical energy transmitted by the wheels 20 to electricity. The generated electricity is advantageously used for powering the one or more hydrogen electrolysers 120 with electrons for the onboard production of hydrogen from water as explained below. Alternatively, depending on the charging status of the energy storage system 160, generated electricity may also be used for recharging the energy storage system 160.

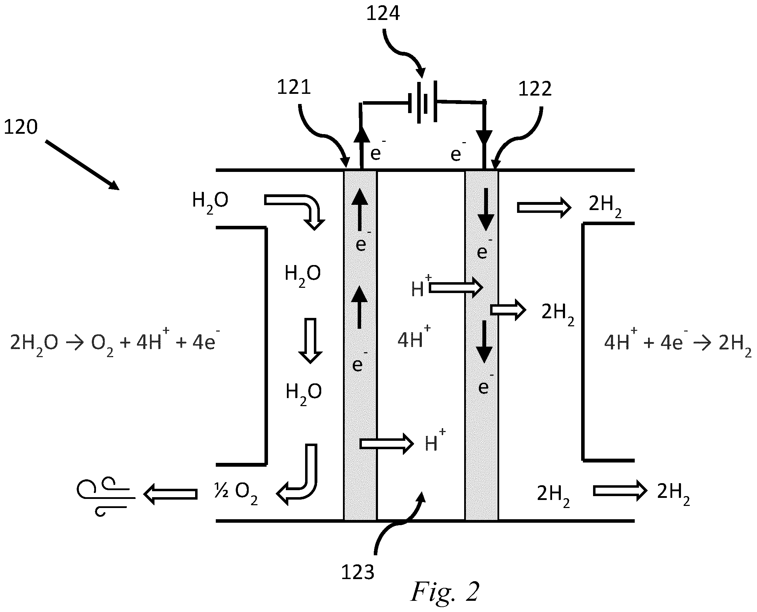

The one or more hydrogen electrolyzers 120 is configured to generate hydrogen and oxygen from water and electrical energy through electrolysis. Electrolysis is a process wherein electricity is used to split hydrogen atoms in a water molecule apart from the oxygen atom and is performed inside an electrolysis cell in the hydrogen electrolyzer 120 (see Fig. 2). The electrolysis cell consists of two electrodes, the cathode 121 and the anode 122 which are separated by a polymer electrolyte membrane 123 surrounded by water. At the anode 122 side, the process decomposes water to produce oxygen and positively charged hydrogen ions (protons). A source of electricity (e.g., from regenerative braking) provides a flow of electrons from the anode 122 through an external circuit 124 to the cathode 121, while protons pass through the polymer electrolyte membrane 123 to the cathode 121. At the cathode 121, the protons recombine with the electrons flowing from the external circuit 124 and together, they form hydrogen gas as seen in Fig. 2. The generated hydrogen is advantageously transferred to a hydrogen storage device 130 for subsequent use in the one or more hydrogen fuel cells 140 to produce electricity for propelling the FCEV 10. Advantageously, one or more hydrogen electrolyzers 120 are assembled together to form one or more stacks of hydrogen electrolyzers (not shown).

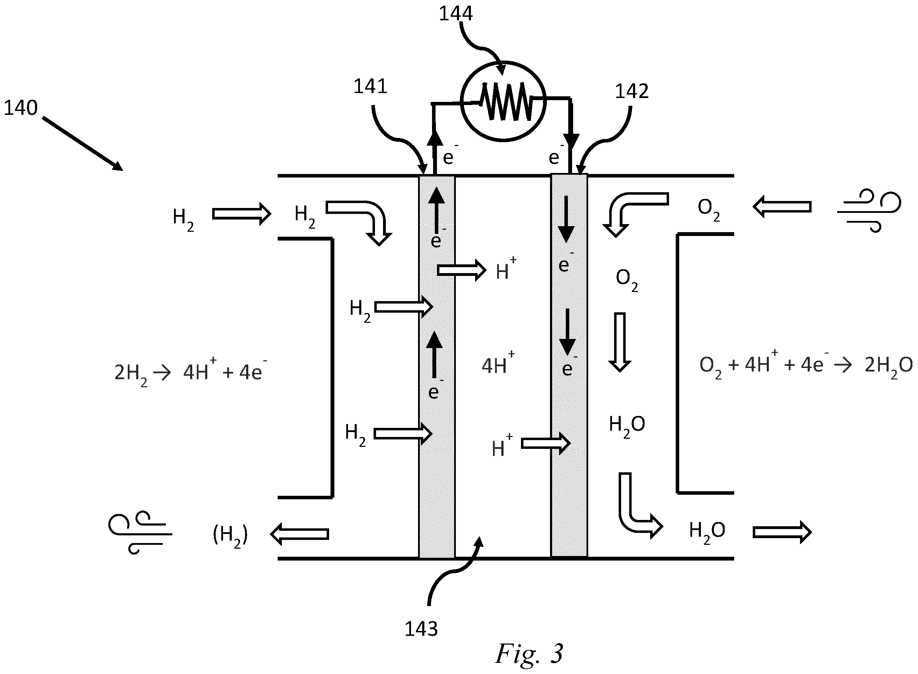

The system 100 comprises one or more hydrogen fuel cells 140 for providing motive power for the FCEV 10. Advantageously, the one or more, such as a plurality of hydrogen fuel cells 140 is assembled in one or more fuel stacks 150. The hydrogen fuel cell 140 is advantageously a polymer electrolyte membrane (PEM) fuel cell 140 as seen in Fig. 3. The advantage of using PEM electrolyzers is their ability to operate at high current densities and variable power levels within seconds. This pairs well with vehicular-generated energy such as regenerative braking, where sudden spikes in energy input would otherwise result in uncaptured energy.

In the PEM fuel cell 140, a polymer electrolyte membrane 143 is sandwiched between a cathode 141 and an anode 142. Hydrogen is introduced to the anode 142, and oxygen (or air) is introduced to the cathode 141. At the anode 122 the hydrogen molecules break apart into positively charged protons and negatively charged electrons due to an electrochemical reaction in the hydrogen fuel cell 140. The positively charged protons travel through the polymer electrolyte membrane 143 to the cathode 141, while the negatively charged electrons are forced to travel through an external circuit 144 to the cathode 121 creating electrical current (e.g., providing power to the FCEV 10). The electrons then recombine with the protons and oxygen at the cathode 141 to form water that will leave the cell as can be seen in Fig. 3.

The electricity generating process taking place in the PEM fuel cell 140 is a reverse reaction of the chemical reaction taking place in the hydrogen electrolyzer 120. Electrolysis is the process which converts electricity into hydrogen, while fuel cells convert the hydrogen back to electricity. The two chemical reactions taking place in a hydrogen fuel cell 140 are the following:

Reaction at the anode 142: 2H₂→ 4H⁺ + 4e⁻.

Reaction at the cathode 141: O₂ + 4H⁺ + 4e⁻→ 2H₂O.

The two chemical reactions taking place in the hydrogen electrolyzer are the following:

Reaction at the anode 122: 2H₂O → O₂ + 4H⁺ + 4e⁻

Reaction at the cathode 121: 4H⁺ + 4e⁻ → 2H₂.

A single hydrogen fuel cell produces less than 1 V, which is insufficient for most applications and therefore the plurality, such as two to more than several hundred hydrogen fuel cells 140, is assembled into fuel cell stacks 150.

The system 100 further includes an energy storage system 160 such as e.g., a battery. Even though hydrogen FCEVs 10 produce their own electricity through their hydrogen-powered fuel cells, it's still necessary that a buffer be in place in the form of a high-voltage battery. The battery is advantageously used for recapturing excess vehicular-generated electricity such as e.g., braking energy generated by the regenerative braking system 110, and will provide extra power during short acceleration events, as well as to smooth out the power delivered from the fuel cell.

Water for the generation of hydrogen fuel in the one or more hydrogen electrolyzers 120 is provided from water stored in a water storage device 180 onboard the FCEV 10. The water is advantageously collected from water vapor produced during the reverse electrolysis in the PEM fuel cell stack 150 during the generation of electricity from hydrogen. This is very valuable since the water generated in this process is very pure and will not need further purification. The generated water is collected from the fuel cell stack 150 and stored in a water storage device 180 until needed for hydrogen production in the hydrogen electrolyzer 120. The water may also be provided from other sources such as e.g., an onboard condenser and/or evaporator in an air-conditioning system, on-board rainwater collectors. It may also be provided from the atmosphere by adsorption onto hygroscopic materials or provided from an external water tap. However, water provided from these sources may require purification or filtering before being added to the water storage device 180.

Temperature is an important variable in the electrolysis reaction since efficiency in hydrogen production increases with increasing temperatures. Advantageously hydrogen electrolyzers 120 operate at about 70°-95°C. Under standard conditions i.e., a temperature of 273.15 K (0 °C, 32 °F) and an absolute pressure of 10⁵ Pa (100 kPa, 1 bar),
the enthalpy required for the decomposition of water is 285.9 kJ/mol. A portion of the required energy for a sustained electrolysis reaction is supplied by thermal energy and the remainder is supplied through electrical energy. Thus, the total energy demand for water electrolysis is the sum of electrical and heat energy demands. The higher the temperature of the reaction, the lower the electrical energy demands in the production of hydrogen. To raise the reaction rate of hydrogen production in the hydrogen electrolyzer 120, the system 100 includes a controller 170 configured to direct surplus heat generated by heat emitting components in the FCEV 10 to the one or more hydrogen electrolyzers 120.

FCEVs 10 do not have a combustion engine to generate heat, so heat must come from other sources. Once the FCEV 10 is up and running, the electrochemical reactions in the PEM fuel cells 140 generate a large amount of heat along with the electricity and water. For better efficiency and consistence output of the fuel cell stack 150, there must be a cooling process either by air or fluid to get rid of the fuel cell-generated heat. By means of a shared cooling system, this heat is advantageously transferred to other components within the FCEV which require warming. Besides the hydrogen electrolyzer 120, the water storage tank 180, and the inlet manifolds of the hydrogen storage 130 may benefit from heat supplied by heat emitting components. Brake resistors, radiators, air-conditioning units, the energy storage system 160, onboard chargers and power converters (DC-DC) are further components that may all generate heat during propulsion of the FCEV 10. The controller 170 in charge of the shared cooling system will direct at least some of the dissipated heat from these components to the hydrogen electrolyzer 120 to improve the reaction rate of hydrogen production.

Sensors may be provided to monitor the temperature in different components of the FCEV, and different control methods or artificial intelligence used to direct heating or cooling as required. The controller 170 may comprise a computing device such as a dedicated microprocessor or electronic control unit (ECU) operating in accordance with instructions from appropriate control software. The controller 170 may comprise one or more processors, one or more memories and one or more network interfaces. As should be appreciated, all of these components communicate with each other over a communication bus.

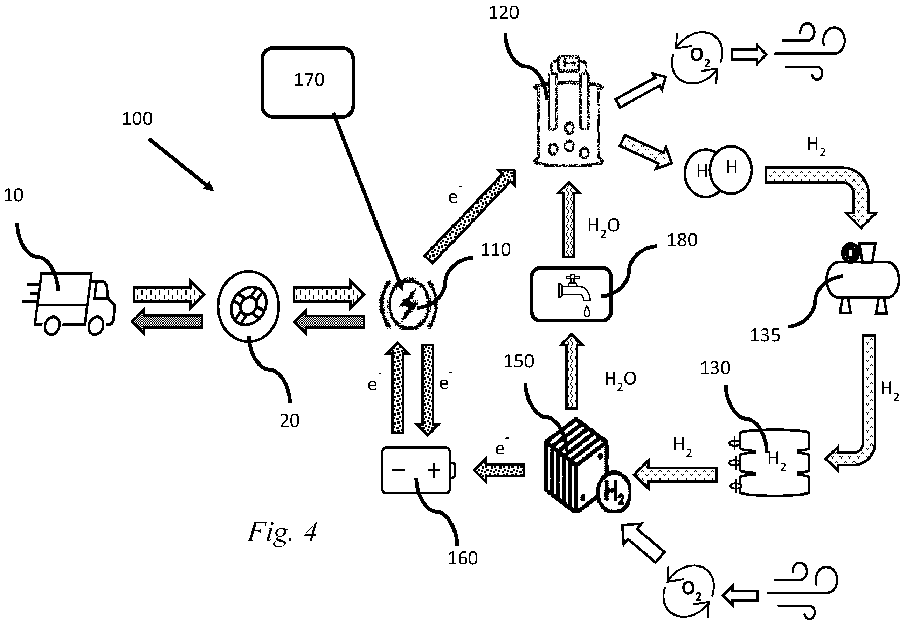

The generated hydrogen is stored on board the FCEV 10 in one or more hydrogen storage devices 130. The hydrogen storage device 130 may be either a chemical or compressed storage device of the type known in the art. Some hydrogen electrolyzers 120 such as e.g., PEM electrolyzers may deliver hydrogen at about 30 bar without a compressor. Thereafter the gas needs to be compressed to about 700 bar for passenger vehicles, and 300-350 bar for trucks and buses. The system 100 advantageously comprises a compressor 135 configured to convert the low-pressure hydrogen generated by the hydrogen electrolyzer 120 to high-pressure hydrogen that can be stored in the one or more hydrogen storage devices 130 (see Fig. 4).

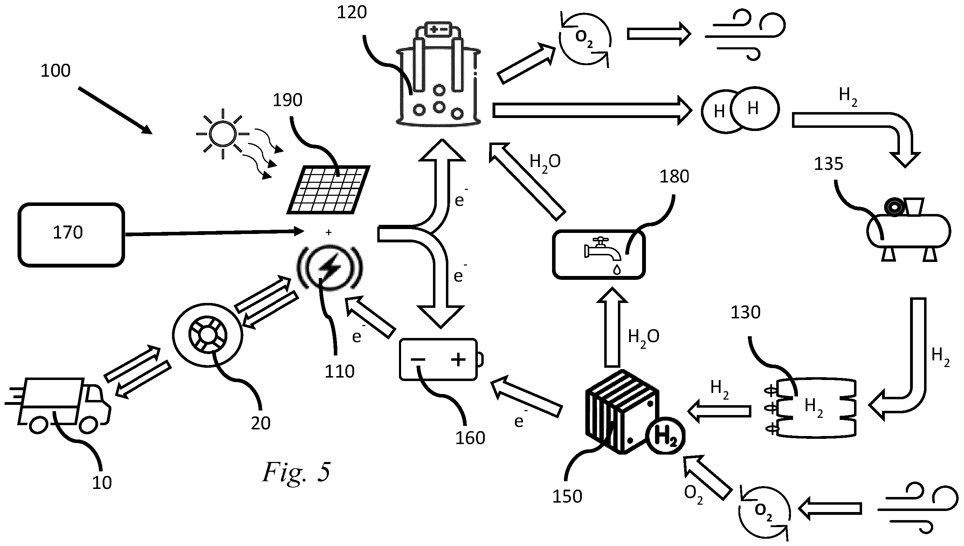

Excess vehicular-generated electrical energy for powering the hydrogen electrolyzer 120 to generate hydrogen may also be obtained from a solar energy harvesting device 190 such as e.g., a solar panel and/or an array of solar panels provided on the exterior such as e.g., the roof or other exposed surfaces of the FCEV 10. The solar energy harvesting device 190 generates free electricity while the FCEV is parked or driving outdoors and exposed to sunlight (see Fig. 5). Alternatively, depending on the charging status of the energy storage system 160, generated electricity from the solar energy harvesting device 190 may also be used for recharging the energy storage system. The advantage of using the solar generated energy to power the hydrogen electrolyzer 120, rather than using the sun's energy directly to propel the FCEV 10, is that hydrogen can be generated and collected in the hydrogen storage device 130 during daytime when the sun is shining and then used for driving the hydrogen fuel cell 140 at night.

Advantageously, excess vehicular-generated electrical energy for powering the hydrogen electrolyzer 120 to generate hydrogen may be provided both by a solar energy harvesting device 190 and regenerative braking as seen in Fig. 5.

In one example of the system 100 described herein, oxygen required for energy production by the PEM fuel cell stack 150, is obtained from surrounding air as seen in Figs. 1, 3 and 6. In this example the PEM fuel cell stack 150 obtains hydrogen gas from the hydrogen storage device 130 which is introduced to the anode 141, and oxygen from air introduced to the cathode 142. The hydrogen gas breaks apart to form protons and electrons. While the protons travel across the polymer electrolyte membrane 143 to the cathode 142, the electrons are forced to travel through an external circuit 144 to perform work (providing power to the FCEV 10) and then recombine with the protons on the cathode 142 side where the protons, electrons, and oxygen molecules combine to form water. Water is stored in the water storage device 180.

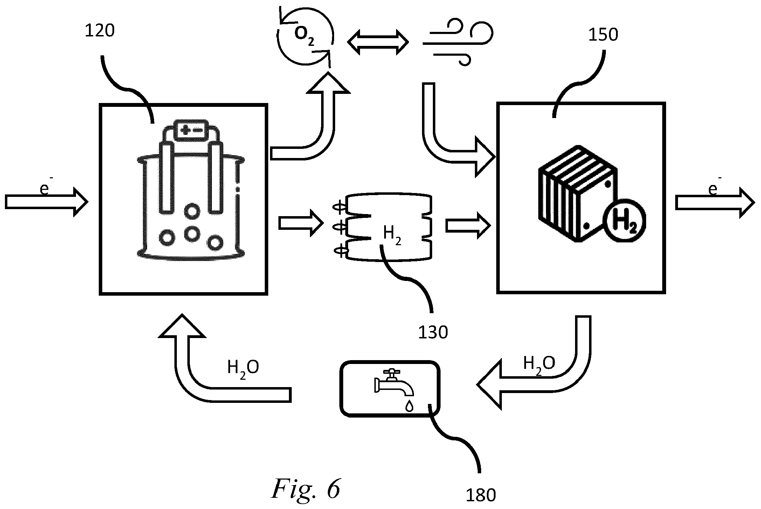

During the hydrogen electrolyzis reaction in the hydrogen electrolyzer 120, electricity provided from vehicular-generated electricity (e.g., due to input from regenerative braking and/or solar energy) is directed to the cathode 121 of the hydrogen electrolyzer 120. Water obtained from the water storage device 180 is provided to the anode 122 where it is split into oxygen and protons. The protons travel across the polymer electrolyte membrane 123 to the cathode 121 where they combine with the protons to form hydrogen gas. The hydrogen gas is stored in the hydrogen storage device 130 while oxygen is expelled into the surrounding air as seen in Fig. 6.

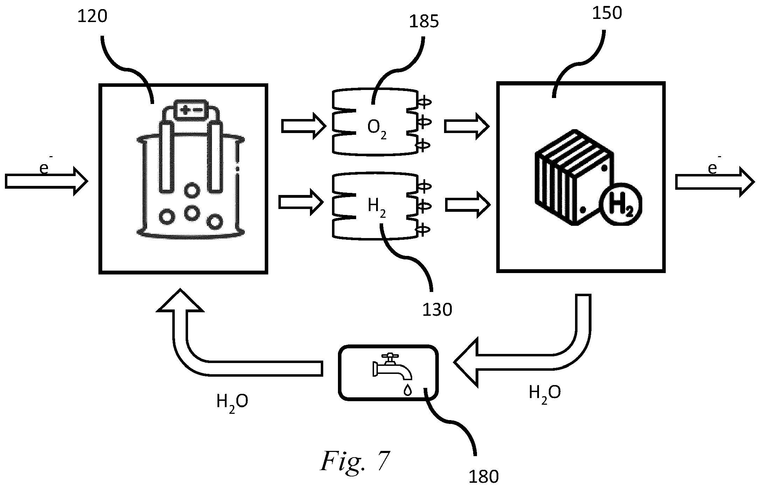

In an alternative example, the system 100 may advantageously include an oxygen storage device 185 wherein oxygen produced by the hydrogen electrolyzer 120 during hydrogen production can be stored. In this example oxygen may instead of being dissipated to the surrounding air during the electrolysis reaction, be collected in an oxygen storage device 185 and used directly by the PEM fuel cell during the energy production (see Fig. 7). This is advantageous since oxygen produced by the electrolyzer is very pure and will not require any purification before being transmitted to the PEM fuel cell. Furthermore, oxygen may be stored at a much higher concentration in an oxygen storage device 185, compared to the concentration of about 20% supplied from the air.

As mentioned above, the reactions that take place in a hydrogen electrolyzer 120 are very similar to the reaction in a hydrogen fuel cell 140, except that the reactions that occur in the anode and cathode are reversed. In a hydrogen fuel cell 140, the anode 141 is where hydrogen gas is consumed (see Fig. 3), and in a hydrogen electrolyzer 120, the hydrogen gas is produced at the cathode 122 (see Fig. 2). A **PEM electrolyzer** 120 uses the same type of polymer electrolyte membrane as a **PEM fuel cell 140.** The hydrogen produced from a PEM electrolyzer cell 120 is perfect for use in PEM **hydrogen fuel cells 140** since hydrogen produced by this type of electrolyzer is of high purity. In an advantageous embodiment the PEM fuel cells 140 may operate both as PEM fuel cells 140 and PEM electrolyzers 120 depending on demand.

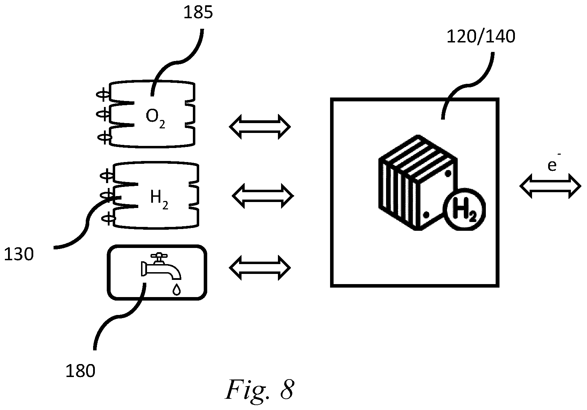

The dual use of PEM fuel cells 140 is very advantageous since separate hydrogen electrolyzer units 120 performing only hydrogen electrolysis can be omitted from the system 100. Instead, a controller may allocate what type of reaction each unit is required to perform depending on demand at a given time. This dual operation of PEM fuel cells/stacks 140/150 is illustrated in Fig. 8. In situations when vehicular-generated electricity is available in excess (e.g., due to input from regenerative braking and/or solar energy), the PEM fuel cells/stacks 140/150 may switch to water decomposition by means of the electrolysis process to generate hydrogen that may be stored for later use. The PEM fuel cells switches to the electrolysis mode to withdraw water from the water storage device 180 and utilizes the vehicular-generated electricity to generate hydrogen and oxygen which are advantageously stored in hydrogen and oxygen storage devices 130, 185 respectively.

When electricity is in high demand such as e.g., during propulsion of the FCEV 10, the PEM fuel cells/stacks 140/150 switch to withdrawing hydrogen and oxygen from the hydrogen and oxygen storage devices 130, 185 to generate electricity and water. Any generated water is advantageously stored in the water storage device 180. It should be noted that the PEM fuel cell/stack 140/150 may not perform the different reactions simultaneously. It either performs the electrolysis reaction or the energy production reaction.

A method for onboard hydrogen production for use in hydrogen fuel cells 140 in a FCEV 10 will now be described. The method includes transferring vehicular-generated electrical energy produced by the FCEV 10 during regenerative braking and/or decent to the hydrogen electrolyzer 120. During regenerative braking of the FCEV 10, any deceleration of the wheels 20 on the FCEV 10 e.g., during braking or descent of a hill, will reverse the torque of the vehicle's electric motor turning the motor into a generator 110 that will convert mechanical energy transmitted by the wheels 20 to electricity. This vehicular-generated energy is advantageously transferred to the one or more hydrogen electrolyzers 120 provided onboard the FCEV 10.

The method includes providing water obtained from operation of one or more hydrogen fuel cells 140 during generation of electricity from hydrogen to the hydrogen electrolyzer 120. Advantageously, water generated during operation of one or more hydrogen fuel cells 140 to generate electricity from hydrogen and oxygen is collected in the onboard water storage device 180. Water collected from hydrogen fuel cells 140, such as PEM fuel cells, is very pure and requires no further purification. However, water may also be collected from air-conditioning devices or from onboard rainwater collectors and thereafter subjected to filtering and/or further purification before being added to the water storage device 180. The collected water is transferred from the water storage device 180 to the one or more hydrogen electrolyzers 120 by means of e.g., a pumping device (not shown).

Hydrogen is generated by means of electrolysis in the hydrogen electrolyzer 120 from water provided from the water storage device 180 and vehicular-generated electrical energy. Electricity provided from vehicular-generated electricity (e.g., due to deceleration of the wheels on the FCEV 10) is directed to the cathode 121 of the hydrogen electrolyzer 120. Water obtained from the water storage device 180 is provided to the anode 122 in the electrolysis cell where it is split into oxygen and protons (see Fig. 2). The protons travel across the membrane 123 to the cathode 121 where they combine with the vehicular generated electrons to form hydrogen gas and oxygen. The hydrogen gas generated by the hydrogen electrolyzer 120 is thereafter collected in a hydrogen storage device 130.

The method also includes directing surplus heat generated by heat-emitting components in the FCEV 10 to the one or more hydrogen electrolyzers 120. A controller 170 is configured to direct heat emitted by the heat-emitting components such as heat dissipating from the energy storage system (batteries) 160, hydrogen fuel cells/stacks 140/150, radiators, heaters, power converters and the electric motor, during operation of the FCEV 10. The added thermal energy improves the rate of the electrolysis reaction in the one or more hydrogen electrolyzers 120.

The hydrogen stored in the hydrogen storage device 130 is thereafter advantageously used in the generation of electrical energy and water by means of the one or more hydrogen fuel cells/stacks 140/150. Any water generated in this process is advantageously collected in the water storage device 180 for subsequent use during electrolysis in the hydrogen electrolyzer 120.

Vehicular-generated electrical energy is often generated in large amounts only during a short time span. The controller 170 may be configured to preferably direct the regenerated electrical energy produced by the FCEV 10 during braking and/or decent either to the one or more hydrogen electrolyzers 120 to generate hydrogen, or alternately to an energy storage system 160 not fully charged.

The method may further include transferring electrical energy obtained from a solar energy harvesting device 190 such as e.g., a solar panel and/or array of solar panels provided on the exterior of the FCEV 10 to the hydrogen electrolyzer 120. Solar energy harvesting devices 190 are advantageously arranged on the roof or other exposed surfaces of the vehicle 10 and may generate free electricity while the FCEV is parked or driving outdoors and exposed to sunlight. The electrical energy generated by the solar energy harvesting device 190 is advantageously transferred directly to the one or more hydrogen electrolyzers 120 for generation of hydrogen gas as described above. Alternatively, depending on the charging status the energy storage system 160, generated electricity from the solar energy harvesting device 190 may also be used for recharging the energy storage system 160. Advantageously, the vehicular-generated electrical energy for powering the hydrogen electrolyzer 120 to generate hydrogen may be provided both by a solar energy harvesting device 190 and regenerative braking as seen in Fig. 5.

The method may further include transferring the hydrogen gas generated by the one or more hydrogen electrolyzers 120 to a compressor 135 configured to convert low-pressure hydrogen gas to high-pressure hydrogen gas for storage in the hydrogen storage device 130 until further use in the one or more hydrogen fuel cells 140.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A system (100) for onboard hydrogen production for use in hydrogen fuel cells (140) in a fuel cell electrical vehicle (10), the system (100) comprising
- a regenerative braking system (110) configured to converting mechanical energy to electrical energy;
- one or more hydrogen electrolyzers (120) configured to generate hydrogen and oxygen from water and electrical energy;
- one or more hydrogen fuel cells (140) configured to generate electrical energy and water from hydrogen;
- one or more energy storage systems (160) for storing electrical energy generated by the regenerative braking system (110) and/or the one or more hydrogen fuel cells (140);
- one or more hydrogen storage devices (130) for storing hydrogen generated by the hydrogen electrolyzer;
- a controller (170) for directing surplus heat generated by heat emitting components in the fuel cell electrical vehicle (10) to the one or more hydrogen electrolyzers (120).

2. The system (100) according to claim 1, wherein the system (100) further includes a solar energy harvesting system provided on an exterior of the fuel cell electrical vehicle (10).

3. The system (100) according to claims 1 and 2, wherein the one or more hydrogen electrolyzers (120) is one or more proton exchange membrane (PEM) electrolyzers assembled into a (PEM) fuel cell stack (150).

4. The system (100) according to any one of the preceding claims, wherein the system (100) further includes a water storage device (180) for storing water generated by the one or more hydrogen fuel cells (140).

5. The system (100) according to any one of the preceding claims, wherein the system (100) further includes a compressor (135) configured to convert low-pressure oxygen to high-pressure hydrogen for storage in the hydrogen storage device (130).

6. The system (100) according to any one of the preceding claims, wherein heat emitting components are selected from the group consisting of the energy storage system (160), hydrogen fuel cells (140), brake resistors, radiators, heaters, power converters and the electric motor.

7. The system (100) according to any one of the preceding claims, wherein the system (100) further includes an oxygen storage device (185) for storing oxygen generated by the one or more hydrogen electrolyzers (120).

8. The system (100) according to any one of the preceding claims, wherein the one or more hydrogen fuel cells (140) is configured to operate as hydrogen electrolyzers (120) generating hydrogen and oxygen from water.

9. A fuel cell electrical vehicle (10) comprising the system (100) for onboard hydrogen production according to any one of the claims 1-8.

10. A method for onboard hydrogen production for use in fuel cells in a fuel cell electric vehicle (10), wherein the method comprises
- transferring vehicular-generated electrical energy produced by a regenerative braking system (110) during braking and/or decent of the fuel cell electrical vehicle (10) to one or more hydrogen electrolyzers (120); and
- providing the one or more hydrogen electrolyzers (120) with water obtained from operation of one or more hydrogen fuel cells (140) during generation of electricity from hydrogen; and
- generating hydrogen by means of the one or more hydrogen electrolyzers (120) from water and the vehicular-generated electrical energy; and
- directing heat emitted during operation of the fuel cell electrical vehicle (10) to the one or more hydrogen electrolyzers (120) for accelerating production of hydrogen gas by the one or more hydrogen electrolyzers (120); and
- collecting generated hydrogen in a hydrogen storage device (130).

11. The method according to claim 10, further comprising transferring electrical energy obtained from a solar energy harvesting device (190) provided on the exterior of the fuel cell electrical vehicle (10) to one or more of the hydrogen electrolyzers (120).

12. The method according to any one of the preceding claims 10-11, wherein hydrogen gas generated by the hydrogen electrolyzer (120) is transferred to a compressor (135) to convert low-pressure hydrogen gas to high-pressure hydrogen gas to be stored in the hydrogen storage device (130) until use in the one or more hydrogen fuel cells (140).

13. The method according to any one of the preceding claims 10-12, wherein the method further comprises transferring water obtained during generation of electrical energy by the one or more hydrogen fuel cells (140) to a water storage device (180) for subsequent use by the one or more hydrogen electrolyzers (120) during generation of hydrogen.

14. The method according to any one of the preceding claims 10-13, wherein oxygen generated by the one or more hydrogen electrolyzers (120) is transferred to an onboard oxygen storage device (185) for use in the one or more hydrogen fuel cells (140) for generation of electricity from hydrogen.

15. The method according to any one of the preceding claims 10-14, wherein the one or more hydrogen fuel cells (140) operate as hydrogen electrolyzers (120) generating hydrogen and oxygen from water.
